# EUROPEAN PATENT SPECIFICATION

(11) **EP 2 577 988 B1**
(45) Date of publication and mention of the grant of the patent: **22.04.2015**
(21) Application number: 11720868.6
(22) Date of filing: 30.03.2011
(51) Int. Cl.: H04R 3/00, G10L 21/02, H04M 1/60

(54) **HANDS-FREE UNIT WITH NOISE TOLERANT AUDIO SENSOR**
FREIHÄNDIGE EINHEIT MIT GERÄUSCHTOLERANTEM TONSENSOR
UNITÉ MAINS LIBRES AVEC UN CAPTEUR AUDIO INSENSIBLE AU BRUIT

(30) Priority: 27.05.2010 US 788637
(43) Date of publication of application: 10.04.2013
(73) Proprietor: Sony Mobile Communications AB, 221 88 Lund (SE)
(72) Inventor: NYSTRÖM, Martin, S-28294 Hörja (SE); SMAILAGIC, Sead, S-25362 Helsingborg (SE); AGEVIK, Markus, S-21230 Malmö (SE)
(74) Representative: Banzer, Hans-Jörg
(86) International application number: PCT/IB2011/051365
(87) International publication number: WO 2011/148271

(56) References cited:
- JP-A- 8 070 344
- JP-A- 8 214 391
- JP-A- 2000 261 534
- JP-A- 2002 125 298

## Description

### BACKGROUND

The present invention relates generally to hands-free units for mobile communication devices and, more particularly, a hands-free unit including a noise tolerant audio sensor for use in noisy environments.

Hands-free units for mobile communication devices free a user's hand to perform tasks while engaged in a phone conversation. Many states now require drivers to use a hands-free unit when the driver is involved in a phone conversation while operating a vehicle. There are many commercially-available headsets and/or earpieces for mobile communication devices. These headsets and/or earpieces typically include a speaker that can be juxtaposed adjacent the user's ear and a microphone to detect the user's speech. In some headsets, the microphone is mounted to a boom that can be positioned. A common problem in conventional headsets is that the microphone picks up ambient noise and transmits the ambient noise along with the user's speech to the remote user.

A variety of techniques are used to reduce noise levels. One approach is to include noise cancellation algorithms that detect and cancel ambient noise from the transmitted signal. However, noise cancellation algorithms tend to induce audibly unpleasant artifacts, as well as increase cost and complexity.

Another approach to the noise problem is to use a bone conduction microphone, such as an ear microphone that inserts into the user's ear canal. The problem with a conventional bone conduction microphone is that the captured sound is distorted as compared to a conventional external microphone. One example of such distortion is the attenuation of high frequency content in the audio signal.

Accordingly, there is a need for new techniques to reduce noise at relatively low cost and with less distortion in the generated audio signals.

JP 8 070 844 A discloses a hands-free unit according to the preamble of claim 1.

### SUMMARY

The present invention provides a hands-free unit as defined in claim 1 and a method as defined in claim 7. The dependent claims define preferred embodiments of the present invention. The present invention relates to a hands-free unit having a multiple audio sensors, e.g., a noise tolerant audio sensor and an external microphone, to detect audible sounds. The noise tolerant audio sensor may, for example, comprise a bone conduction microphone that inserts into the user's ear canal and generates a first audio signal. The external microphone is mounted in an exposed location and generates a second audio signal. A control unit detects noise levels based on comparison of the first and second audio signals and switches voice input to the communication device between the ear microphone and external microphone based on the detected noise levels. Bandwidth extension and filtering is used to restore high frequency information and reduce distortion of the first audio signal.

One exemplary embodiment of the invention comprises a hands-free unit for a mobile communication device. The hands-free unit comprises a first noise tolerant audio sensor to generate a first audio signal based on detection of audible sounds; a second external audio sensor to generate a second audio signal based on detection of said audible sounds; a control unit, and a distortion reduction filter. The control unit detects noise levels based on comparison of first and second audio signals; and selects one of the first and second audio signals for transmission based on the detected noise level. The distortion reduction filter enhances the first audio signal to generate an enhanced first audio signal before transmission to the remote party.

The distortion reduction filter includes a bandwidth extender to add one or more frequency components to said first audio signal.

In some embodiments of the invention distortion reduction filter further includes a tuning filter to filter the first audio signal after the bandwidth of the first audio signal has been extended.

In some embodiments of the invention, the distortion reduction filter is configured to divide the first audio signal into two or more bands, extend the bandwidth of at least one of the frequency bands, and recombine the frequency bands.

In some embodiments of the invention, the hands-free unit further comprises an adaptive tuning controller to adapt the filter coefficients of the tuning filter based a comparison between the enhanced first audio signal and the second audio signal. In some embodiments of the invention, the control unit is configured to trigger the adaptive tuning controller to adjust the filter coefficients when noise levels are low.

In some embodiments of the invention, the control unit for the hands-free unit detects noise levels based on a comparison of the first audio signal without bandwidth extension with the second audio signal.

Other exemplary embodiments of the invention comprise methods implemented by a hands-free unit of generating an audio signal for transmission. One such method comprises receiving a first audio signal from a first noise tolerant audio sensor; receiving a second audio signal from a second external audio sensor; detecting noise levels by comparing said first and second audio signals; selecting one of the first and second audio signals for transmission based on the detected noise level, and enhancing the first audio signal by adding one or more frequency components to the first audio signal to extend the bandwidth of the first audio signal.

In some embodiments of the invention, enhancing said first audio signal further comprises filtering the first audio signal in a tuning filter after the bandwidth of the first audio signal is extended.

In some embodiments of the invention, enhancing the first audio signal comprises dividing the first audio signal into two or more bands, extending the bandwidth of at least one of the frequency bands, and recombining the frequency bands.

In some embodiments of the invention, the method further comprises adapting filter coefficients of the tuning filter based on a comparison between the enhanced first audio signal and the second audio signal.

In some embodiments of the invention, adapting filter coefficients of the tuning filter is performed when noise levels are low.

In some embodiments of the invention, detecting noise levels by comparing said first and second audio signals comprises comparing the first audio signal without bandwidth extension with the second audio signal.

### BRIEF DESCRIPTION OF THE DRAWINGS

Fig. 1 illustrates a hands-free unit according to one exemplary embodiment.
Fig. 2 illustrates the main functional components of a base unit for the hands-free unit according to one embodiment.
Fig. 3 illustrates the main functional elements of a distortion reduction filter for the hands-free base unit according to one exemplary embodiment.
Fig. 4 illustrates the main functional elements of a distortion reduction filter for the hands-free base unit according to another exemplary embodiment.
Fig. 5 illustrates an exemplary method implemented by a hands-free unit for generating an audio signal for transmission.

### DETAILED DESCRIPTION

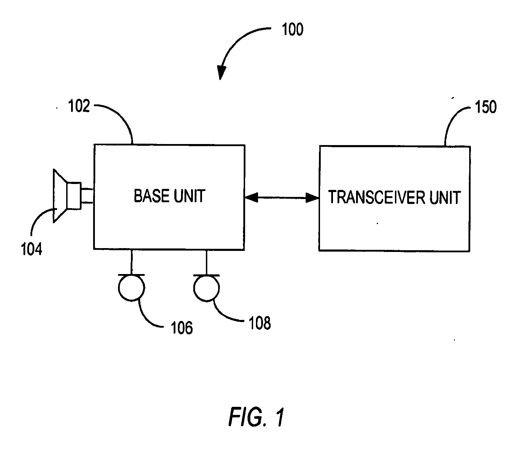

Referring now to the drawings, Fig. 1 illustrates the main functional components of an exemplary hands-free unit 100 according to one embodiment of the present invention. The hands-free unit 100 comprises a base unit 102, speaker 104, external audio sensor 106, and a noise tolerant audio sensor 108. The base unit 102 of the hands-free unit 100 communicates with a transceiver unit 150, such as a mobile phone, over a wired or wireless interface. For example, the base unit 102 and transceiver unit 150 may include a Bluetooth wireless interface or other short-range wireless interface. Audio signals received by the transceiver unit 150 are output to the speaker 104. Audio sensors 106, 108 detect audible sounds and generate audio signals for transmission by the transceiver unit 150.

External audio sensor 106 may comprise an external microphone 106 that is positioned in an exposed area to capture the speaker's voice. For example, external microphone 106 may be mounted on a boom or other extension of the base unit 102. audio sensor 108 comprises any noise tolerant audio sensor, e.g., a bone conduction microphone, an in-ear microphone that inserts into the user's ear canal, or a vibration audio sensor, e.g., a throat microphone. It will be appreciated that the present invention is not limited to these particular noise tolerant audio sensors. The base unit 102 determines noise levels based on the difference between the audio signals from audio sensors 106, 108. When the noise levels are low, the base unit 102 outputs the audio signal from the external microphone 106 to the transceiver 150. Conversely, when the noise levels are high, the base unit 102 may output audio signals from the noise tolerant audio sensor 108 to the transceiver unit 150. Because the audio signal from the noise tolerant audio sensor 108 is likely to be distorted and missing high frequency components, the base unit 102 may filter the audio signal from the noise tolerant audio sensor 108 to restore missing high frequency components and reduce distortion of the audio signal.

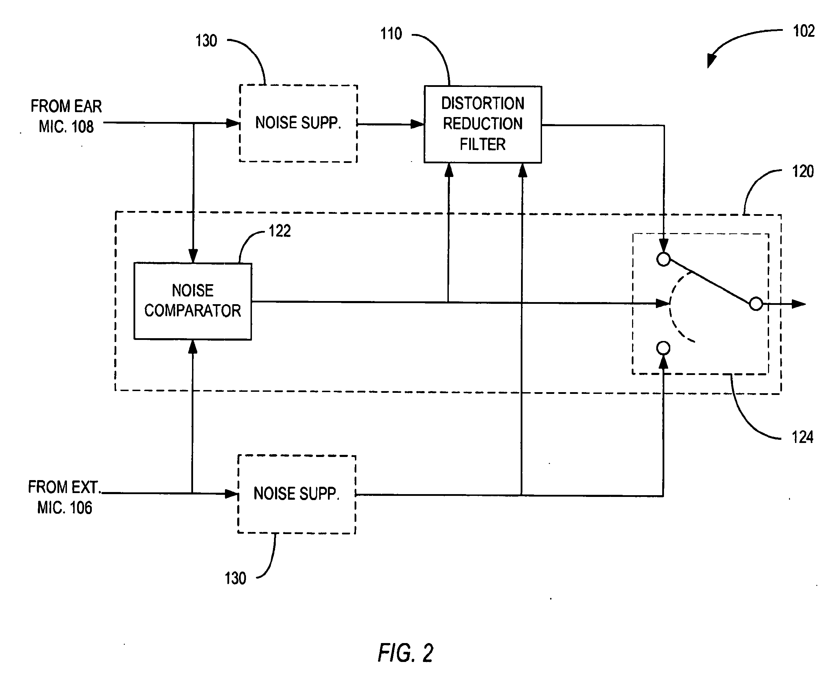

Fig. 2 illustrates exemplary components of the hands-free base unit 102 involved in the processing of audio signals from audio sensors 106, 108. The audio processing circuits comprise a distortion reduction filter 110 and a control unit 120. The distortion reduction filter 110 extends the bandwidth and reduces distortion of the audio signal from the noise tolerant audio sensor 108 to generate an enhanced or extended audio signal. The control unit 120 compares the noise level in the audio signals from the external microphone 106 and noise tolerant audio sensor 108, respectively, and determines which of the audio signals to output for transmission. In some embodiments of the invention, noise suppressors 130 may be used to suppress or cancel noise in the audio signals from audio sensors 106, 108. Preferably, noise suppression/cancellation is applied to the audio signal from noise tolerant audio sensor 108 before input to the distortion reduction filter 110.

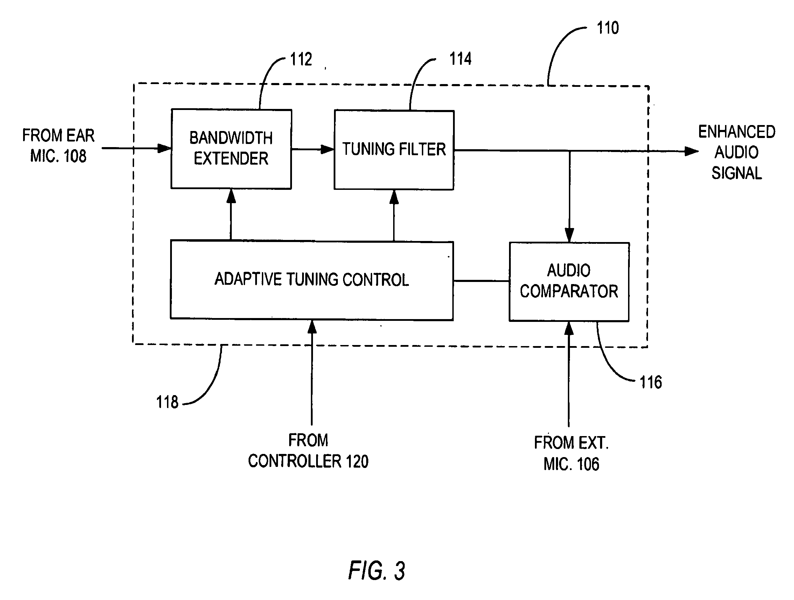

Fig. 3 illustrates a single-band distortion filter 110 according to one embodiment. The distortion reduction filter 110 comprises a bandwidth extender 112, tuning filter 114, audio comparator 116, and adaptive tuning controller 118. The bandwidth extender 112 adds high frequency components to the audio signal from the noise tolerant audio sensor 108. The tuning filter 114 filters the enhanced audio signal 112 to produce an enhanced audio signal with more natural sound. The tuning filter 114 may, for example, comprise a full bandwidth finite impulse response (FIR) filter to filter the full bandwidth of the enhanced audio signal. The audio comparator 116 compares the audio signal from external microphone 106 with the enhanced audio signal from noise tolerant audio sensor 108 and outputs the difference to the adaptive tuning controller 118. The adaptive tuning controller 118 may then make tuning adjustments to the bandwidth extender 112 and/or tuning filter 114. In one exemplary embodiment, the adaptive tuning controller 118 uses a least-means-square algorithm to adjust the filter coefficients for the tuning filter 114 so as to minimize the difference between the audio signal from the external microphone 106 and the enhanced audio signal from the noise tolerant audio sensor 108. Preferably, adaptive tuning of the distortion reduction filter 100 is performed when noise levels are low.

The control unit 120 comprises a noise comparator 122 and selection unit 124. Noise comparator 122 compares the audio signal from external microphone 106 with the audio signal from the noise tolerant audio sensor 108 before enhancement by the distortion reduction filter 110. The comparison of the two signals provides an indication of the noise levels in the environment. Based on the comparison of the two signals, the comparator 122 outputs a control signal to the selection unit 124. The selection unit 124 may, for example, comprise a switch or other circuit element to select between the enhanced audio signal from noise tolerant audio sensor 108 and the audio signal from external microphone 106.

The noise comparator 122 may also output a control signal to the adaptive tuning unit 118 to indicate when noise levels are low enough for adaptive tuning 118. The noise comparator 122 may use a first threshold corresponding to a first noise level to control the selection unit 124 and a second threshold corresponding to a second noise level to control adaptive tuning. In one embodiment, the second noise level may be lower than the first noise level. In other embodiments, the same noise threshold can be used for both signal selection and adaptive tuning.

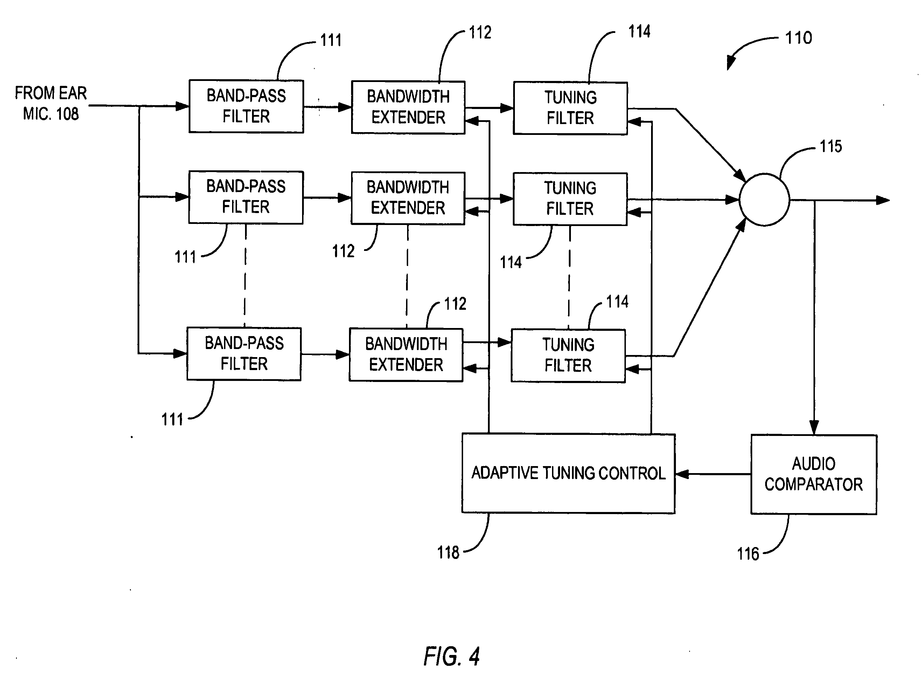

Fig. 4 illustrates a multi-band distortion reduction filter 110 according to a second embodiment of the invention. The multi-band distortion reduction filter 110 includes a series of band-pass filters 111 to separate the audio signal from the noise tolerant audio-sensor 108 into two or more frequency bands. Each frequency band is then separately processed by a bandwidth extender 112 and tuning filter 114 as previously described. The signals output from the tuning filters 114 are then combined in a combiner 115 to generate an enhanced audio signal. The enhanced audio signal is output to the selection circuit 124. An audio comparator 116 then compares the audio signal from the external microphone 106 with the enhanced audio signal from the noise tolerant audio sensor 108 and outputs the difference to the adaptive tuning controller 118. The adaptive tuning controller 118 may then make tuning adjustments to the bandwidth extender 112 and/or tuning filter 114 as previously described. Tuning adjustments can be made separately for each frequency band.

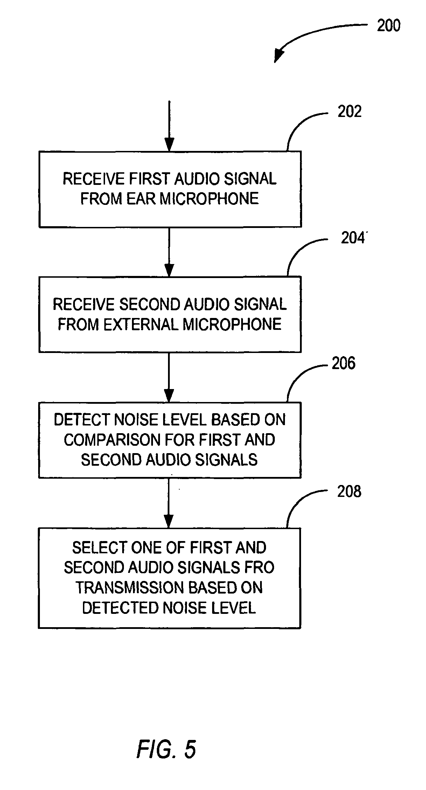

Fig. 5 illustrates an exemplary method implemented by a hands-free unit 100 of generating an audio signal for transmission. The method is implemented by the control unit 120 of the hands-free unit 100. The control unit 120 receives a first audio signal from a noise tolerant audio sensor 108, such as one disposed in a user's inner canal (block 202), and receives a second audio signal from an external microphone 106 (block 204). The control unit 120 detects noise levels by comparing the first and second audio signals (block 206), and selects either the first or second audio signal for output to the transceiver unit 150 based on the detected noise levels. In one exemplary embodiment, the hands-free unit 100 may apply audio enhancement to the first audio signal to generate an enhanced audio signal for transmission.

The present invention may, for example, be carried out in other specific ways than those herein set forth without departing from the scope of the invention.

## Claims

1. A hands-free unit (100) for a mobile communication device comprising:
a first noise tolerant audio sensor (108) to generate a first audio signal based on detection of audible sounds, said first noise tolerant audio sensor (108) comprising one of a bone conduction microphone, an in-ear microphone, and a vibration audio sensor;
a second external audio sensor (106) to generate a second audio signal based on detection of said audible sounds; and
a control unit (120) configured to:
detect noise level based on comparison of first and second audio signals; and
select one of said first and second audio signals for output for transmission to a remote party based on said detected noise level,
**characterized by**
a distortion reduction filter (110) to enhance said first audio signal before transmission to the remote party, wherein said distortion reduction filter (110) includes a bandwidth extender (112) to add one or more frequency components to said first audio signal.

2. The hands-free unit (100) of claim 1, wherein said distortion reduction filter (110) further includes a tuning filter (114) to filter the first audio signal after the bandwidth of the first audio signal has been extended.

3. The hands-free unit (100) according to claim 2, further comprising an adaptive tuning controller (112) to adapt the filter coefficients for the tuning filter (114) based on a comparison between said enhanced first audio signal and said second audio signal.

4. The hands-free unit (100) according to claim 3, wherein the control unit (120) is configured to trigger the adaptive tuning controller (112) to adjust the filter coefficients when noise level is low.

5. The hands-free unit (100) of any one of claims 1-4, wherein said distortion reduction filter (110) is configured to:
divide said first audio signal into two or more frequency bands;
extend the bandwidth of at least one of said frequency bands; and
recombine said frequency bands.

6. The hands-free unit (100) according to any one of claims 1-5, wherein said control unit (120) detects said noise level based on a comparison of the first audio signal before filtering by the distortion reduction filter (110) with the second audio signal.

7. A method implemented by a hands-free unit of generating an audio signal for transmission, said method comprising:
receiving (202) a first audio signal from a first noise tolerant audio sensor (108),
said first noise tolerant audio sensor (108) comprising one of a bone conduction microphone, an in-ear microphone, and a vibration audio sensor;
receiving (204) a second audio signal from a second external audio sensor (106);
detecting (206) noise level by comparing said first and second audio signals; and
selecting (208) one of said first and second audio signals for output for transmission to a remote party based on said detected noise level;
**characterized by**
enhancing said first audio signal before transmission to the remote party by adding one or more frequency components to the first audio signal to extend the bandwidth of the first audio signal.

8. The method of claim 7, wherein enhancing said first audio signal further comprises filtering said first audio signal in a tuning filter (114) after the bandwidth of the first audio signal is extended.

9. The method of claim 7 or claim 8, wherein enhancing said first audio signal comprises dividing said first audio signal into two or more frequency bands, extend the bandwidth of at least one of said frequency bands, and recombining said frequency bands.

10. The method according to any one of claims 8-9, further comprising adapting filter coefficients of the tuning filter (114) based on a comparison between the enhanced first audio signal and the second audio signal.

11. The method of claim 10, wherein adapting filter coefficients of the tuning filter (114) is performed when noise level is low.

12. The method according to any one of claims 7-11, wherein detecting said noise level by comparing said first and second audio signals comprises comparing the first audio signal without bandwidth extension with the second audio signal.

## Patentansprüche

1. Freihand-Einheit (100) für eine Mobilkommunikationsvorrichtung, umfassend:
einen ersten geräuschtoleranten Audiosensor (108) zum Erzeugen eines ersten Audiosignals abhängig von einer Detektion hörbarer Laute, wobei der erste geräuschtolerante Audiosensor (108) eines von einem Knochenleit-Mikrophon, einem In-Ohr-Mikrophon und einem Schwingungsaudiosensor umfasst;
einen zweiten externen Audiosensor (106) zum Erzeugen eines zweiten Audiosignals abhängig von einer Detektion der hörbaren Laute; und
eine Steuereinheit (120), die eingerichtet ist,
um einen Geräuschpegel abhängig von einem Vergleich
der ersten und zweiten Audiosignale zu detektieren; und
um eines der ersten und zweiten Audiosignale zum Ausgeben für eine Übertragung zu einer fernen Partei abhängig von dem detektierten Geräuschpegel auszuwählen,
**gekennzeichnet durch**
ein Verzerrungsreduktionsfilter (110) zum Erhöhen des ersten Audiosignals vor einer Übertragung zu der fernen Partei, wobei das Verzerrungsreduktionsfilter (110) eine Bandbreitenerweiterungseinrichtung (112) umfasst, um dem ersten Audiosignal eine oder mehrere Frequenzkomponenten hinzuzufügen.

2. Freihand-Einheit (100) nach Anspruch 1, wobei das Verzerrungsreduktionsfilter (110) weiterhin ein Abstimmfilter (114) umfasst, um das erste Audiosignal nach dem Erweitern der Bandbreite des ersten Audiosignals zu filtern.

3. Freihand-Einheit (100) nach Anspruch 2, welche weiterhin eine adaptive Abstimmsteuereinrichtung (112) umfasst, um die Filterkoeffizienten für das Abstimmfilter (114) abhängig von einem Vergleich zwischen dem erhöhten ersten Audiosignal und dem zweiten Audiosignal zu adaptieren.

4. Freihand-Einheit (100) nach Anspruch 3, wobei die Steuereinheit (120) eingerichtet ist, um ein Einstellen der Filterkoeffizienten durch die adaptive Abstimmsteuereinrichtung (112) auszulösen, wenn ein Geräuschpegel niedrig ist.

5. Freihand-Einheit (100) nach einem der Ansprüche 1-4, wobei das Verzerrungsreduktionsfilter (110) eingerichtet ist,
um das erste Audiosignal in zwei oder mehr Frequenzbänder zu teilen;
um die Bandbreite wenigstens eines der Frequenzbänder zu erweitern; und
um die Frequenzbänder wieder zu kombinieren.

6. Freihand-Einheit (100) nach einem der Ansprüche 1-5, wobei die Steuereinheit (120) den Geräuschpegel abhängig von einem Vergleich des ersten Audiosignals vor einem Filtern durch das Verzerrungsreduktionsfilter (110) mit dem zweiten Audiosignal detektiert.

7. Verfahren zum Erzeugen eines Audisignals zur Übertragung, das durch eine Freihand-Einheit implementiert wird, wobei das Verfahren umfasst:
Empfangen (202) eines ersten Audiosignals von einem ersten geräuschtoleranten Audiosensor (108), wobei der erste geräuschtolerante Audiosensor (108) eines von einem Knochenleit-Mikrophon, einem In-Ohr-Mikrophon und einem Schwingungsaudiosensor umfasst;
Empfangen (204) eines zweiten Audiosignals von einem zweiten externen Audiosensor (106);
Detektieren (206) eines Geräuschpegels durch Vergleichen der ersten und zweiten Audiosignale; und
Auswählen (208) eines der ersten und zweiten Audiosignale für eine Ausgabe zur Übertragung zu einer fernen Partei abhängig von dem detektierten Geräuschpegel;
**gekennzeichnet durch**
Erhöhen des ersten Audiosignals vor einer Übertragung zu der fernen Partei **durch** Hinzufügen einer oder mehreren Frequenzkomponenten zu dem ersten Audiosignal, um die Bandbreite des ersten Audiosignals zu erweitern.

8. Verfahren nach Anspruch 7, wobei ein Erhöhen des ersten Audiosignals weiterhin ein Filtern des ersten Audiosignals in einem Abstimmfilter (114) umfasst, nachdem die Bandbreite des ersten Audiosignals erweitert wird.

9. Verfahren nach Anspruch 7 oder Anspruch 8, wobei ein Erhöhen des ersten Audisignals ein Teilen des ersten Audiosignals in zwei oder mehr Frequenzbänder, ein Erweitern der Bandbreite wenigstens eines der Frequenzbänder und ein wieder Kombinieren der Frequenzbänder umfasst.

10. Verfahren nach einem der Ansprüche 8-9, welches weiterhin ein Adaptieren von Filterkoeffizienten des Abstimmfilters (114) abhängig von einem Vergleich zwischen dem erhöhten ersten Audiosignal und dem zweiten Audiosignal umfasst.

11. Verfahren nach Anspruch 10, wobei ein Adaptieren der Filterkoeffizienten des Abstimmfilters (114) ausgeführt wird, wenn ein Geräuschpegel niedrig ist.

12. Verfahren nach einem der Ansprüche 7-11, wobei ein Detektieren des Geräuschpegels durch Vergleichen der ersten und
zweiten Audiosignale ein Vergleichen des ersten Audiosignals ohne Bandbreitenerweitung mit dem zweiten Audiosignal umfasst.

## Revendications

1. Unité mains libres (100) pour un dispositif de communication mobile comprenant :
un premier capteur audio insensible au bruit (108) pour générer un premier signal audio sur la base d'une détection de sons audibles, ledit premier capteur audio insensible au bruit (108) comprenant l'un d'un microphone à conduction osseuse, d'un microphone intra-auriculaire, et d'un capteur audio de vibration ;
un deuxième capteur audio externe (106) pour générer un deuxième signal audio sur la base d'une détection desdits sons audibles ; et
une unité de commande (120) configurée pour :
détecter un niveau de bruit sur la base d'une comparaison d'un premier signal audio et d'un deuxième signal audio ; et
sélectionner l'un desdits premier et deuxième signaux audio pour le délivrer en sortie pour une transmission à une partie distante sur la base dudit niveau de bruit détecté,
**caractérisée par**
un filtre de réduction de distorsion (110) pour améliorer ledit premier signal audio avant une transmission à la partie distante, où ledit filtre de réduction de distorsion (110) comporte une unité d'extension de largeur de bande (112) pour ajouter une ou plusieurs composante(s) de fréquence audit premier signal audio.

2. Unité mains libres (100) de la revendication 1, dans laquelle ledit filtre de réduction de distorsion (110) comporte en outre un filtre d'accord (114) pour filtrer le premier signal audio après l'extension de la largeur de bande du premier signal audio.

3. Unité mains libres (100) selon la revendication 2, comprenant en outre un dispositif de commande d'accord adaptatif (112) pour adapter les coefficients de filtre pour le filtre d'accord (114) sur la base d'une comparaison entre ledit premier signal audio amélioré et ledit deuxième signal audio.

4. Unité mains libres (100) selon la revendication 3, dans laquelle l'unité de commande (120) est configurée pour déclencher le dispositif de commande d'accord adaptatif (112) pour régler les coefficients de filtre lorsque le niveau de bruit est faible.

5. Unité mains libres (100) de l'une quelconque des revendications 1 à 4, dans laquelle ledit filtre de réduction distorsion (110) est configuré pour :
diviser ledit premier signal audio en deux bandes de fréquence ou plus ;
étendre la largeur de bande d'au moins une desdites bandes de fréquence ; et
recombiner lesdites bandes de fréquence.

6. Unité mains libres (100) selon l'une quelconque des revendications 1 à 5, dans laquelle ladite unité de commande (120) détecte ledit niveau de bruit sur la base d'une comparaison du premier signal audio avant le filtrage par le filtre de réduction de distorsion (110) au deuxième signal audio.

7. Procédé mis en oeuvre par une unité mains libres permettant de générer un signal audio pour une transmission, ledit procédé comprenant le fait :
de recevoir (202) un premier signal audio à partir d'un premier capteur audio insensible au bruit (108), ledit premier capteur audio insensible au bruit (108) comprenant l'un d'un microphone à conduction osseuse, d'un microphone intra-auriculaire, et d'un capteur audio de vibration ;
de recevoir (204) un deuxième signal audio à partir d'un deuxième capteur audio externe (106) ;
de détecter (206) le niveau de bruit par comparaison desdits premier et deuxième signaux audio ; et
de sélectionner (208) l'un desdits premier et deuxième signaux audio pour le délivrer en sortie pour une transmission à une partie distante sur la base dudit niveau de bruit détecté ;
**caractérisé par** le fait
d'améliorer ledit premier signal audio avant une transmission à la partie distante par l'ajout d'une ou de plusieurs composante(s) de fréquence au premier signal audio pour étendre la largeur de bande du premier signal audio.

8. Procédé de la revendication 7, dans lequel l'amélioration dudit premier signal audio comprend en outre le filtrage dudit premier signal audio dans un filtre de d' accord (114) après l'extension de la largeur de bande du premier signal audio.

9. Procédé de la revendication 7 ou 8, dans lequel l'amélioration dudit premier signal audio comprend le fait de diviser ledit premier signal audio en deux bandes de fréquence ou plus, d'étendre la largeur de bande d'au moins une desdites bandes de fréquence, et de recombiner lesdites bandes de fréquence.

10. Procédé selon l'une quelconque des revendications 8 à 9, comprenant en outre l'adaptation de coefficients de filtre du filtre d'accord (114) sur la base d'une comparaison entre le premier signal audio amélioré et le deuxième signal audio.

11. Procédé de la revendication 10, dans lequel l'adaptation de coefficients de filtre du filtre d'accord (114) est effectuée lorsque le niveau de bruit est faible.

12. Procédé selon l'une quelconque des revendications 7 à 11, dans lequel la détection dudit niveau de bruit par comparaison desdits premier et deuxième signaux audio comprend le fait de comparer le premier signal audio sans extension de largeur de bande au deuxième signal audio.
